# EUROPEAN PATENT APPLICATION

(11) **EP 4 635 656 A1**
(43) Date of publication of application: **22.10.2025**
(21) Application number: 25157639.3
(22) Date of filing: 13.02.2025
(51) Int. Cl.: B23B 29/03

(54) **BODY, GUIDE PAD, AND HOLE MACHINING TOOL**

(30) Priority: 29.03.2024 JP 2024055398
(71) Applicant: Tungaloy Corporation, Iwaki-shi, Fukushima 970-1144 (JP)
(72) Inventor: SHIKAMA, Hiroya, Iwaki-shi, Fukushima, 9701144 (JP); SAJI, Ryuichi, Iwaki-shi, Fukushima, 9701144 (JP)
(74) Representative: Vossius & Partner Patentanwälte Rechtsanwälte mbB

(57) **Abstract**

A body (100) of a hole machining tool includes a main body part (110) formed in a cylindrical shape, and a guide part (300) provided on a peripheral part of the main body part, in which the guide part has a holding groove (320) formed in the main body part and a rolling element (330) accommodated so as to be rollable in the holding groove.

## Description

### Field

The present invention relates to a body, a guide pad, and a hole machining tool.

### Description of Related Art

A leading end portion of a body of a hole machining tool, such as a BTA tool and a gun drill, is provided with a guide pad, in addition to a cutting edge, as described in JP2015-077679 A and WO2011/142370. During machining of a hole, a force in a biased direction acts on a cutting edge, where a guide pad abuts on an inner surface of a hole in a workpiece, and a deformation, etc. of the body which is caused by the above-mentioned force is suppressed by the guide pad, thereby making it possible to perform hole machining with a high accuracy.

Meanwhile, a guide pad is pressed against and slid on an inner surface of a hole in a workpiece, to thereby secure straightness of the hole. Thus, in particular, when a tool has a large diameter or when a workpiece is of a material that easily becomes hot, welding occurs due to the heat caused by burnishing torque (rubbing force), thereby resulting in a short tool life.

### Summary

An object of the present invention is to provide a body, a guide pad, and a hole machining tool having a guide pad capable of suppressing welding due to heat caused by friction during machining, and thereby extending a tool life.

A body according to an aspect of the present invention is a body of a hole machining tool, the body including: a main body part formed in a cylindrical shape; and a guide part provided on a peripheral part of the main body part, in which the guide part has a holding groove formed in the main body part and a rolling element accommodated so as to be rollable in the holding groove.

In the body having the above-described configuration, the rolling elements of the guide pad that are held in the holding groove of the main body part roll while abutting on an inner surface of a hole in a workpiece during machining. Such configuration makes it possible to guide the main body part with respect to the inner surface of the hole in the workpiece during machining, while suppressing welding due to heat generated by friction, and it is therefore possible to extend a tool life.

The rolling element may be replaceable.

The holding groove may extend along a rotational axis of the main body part, and a plurality of the rolling elements may be aligned and accommodated in the holding groove.

The rolling element may be formed in a cylindrical shape and held within the holding groove so as to be rollable about a central axis that extends in the same direction as a rotational axis of the main body part.

The rolling element may be formed in a spherical shape.

A hole machining tool according to an aspect of the present invention includes the above-described body and a cutting insert mounted on the body.

A guide pad according to an aspect of the present invention is a guide pad attached on a peripheral part of a body of a hole machining tool, the guide pad including: a base part having a holding groove; and a rolling element accommodated so as to be rollable within the holding groove.

The rolling element may be replaceable.

A plurality of the rolling elements may be aligned in a single line and accommodated in the holding groove.

The rolling element may be formed in a cylindrical shape and held within the holding groove so as to be rollable about a same central axis.

The rolling element may be formed in a spherical shape.

The base part may be fixed on the body with a fastening member, and the rolling element may be prevented from falling off from the holding groove by using the fastening member.

A hole machining tool according to an aspect of the present invention includes: the above-described guide pad; a body on which the guide pad is attached; and a cutting insert mounted on the body.

### Brief Description of Drawings

Fig. 1 is a perspective view showing the entire configuration of a hole machining tool according to a first embodiment.
Fig. 2 is a perspective view showing a guide part provided in a body.
Fig. 3 is a cross-sectional view taken along line III-III in Fig. 2.
Fig. 4 is a perspective view showing a guide part according to a modification.
Fig. 5 is a perspective view showing the entire configuration of a hole machining tool according to a second embodiment.
Fig. 6 is a perspective view showing a guide pad attached to a main body part.

### Detailed Description

Embodiments of the present invention will now be described below with reference to the attached drawings. For the purpose of facilitating the understanding of the description, like components will be denoted with like reference numerals in each of the drawings, wherever possible, and redundant descriptions will be omitted.

### (First Embodiment)

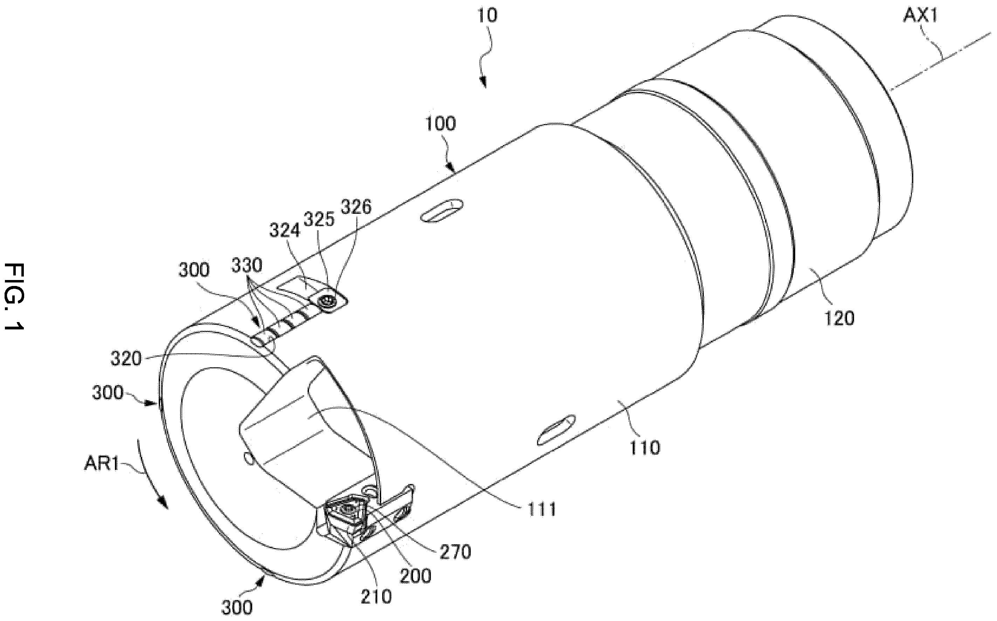

First, a configuration of a hole machining tool 10 according to a first embodiment will be described below. The hole machining tool 10 is a cutting tool for forming a hole in a workpiece (not shown), which is a so-called "BTA tool." As shown in Fig. 1, the hole machining tool 10 includes a body 100 and a cutting insert 200.

The body 100 is a member that generally constitutes the entire part of the hole machining tool 10 and is made of steel. The body 100 has a connecting part 120. The connecting part 120 is a portion located on one side along a longitudinal direction of the body 100, and such connecting part 120 is to be connected to a drilling tube when mounted on a machine tool (not shown).

For the purpose of illustration, an end side of the body 100 on which the connecting part 120 is provided will also be referred to as a "base end side." The opposite side to the base end side will also be referred to as a "leading end side."

The body 100 is formed so as to extend linearly from the connecting part 120 toward the leading end side. The body 100 has a substantially cylindrical main body part 110, and a leading end portion of the main body part 110 is provided with a recessed part 111 which is formed with a portion of a side surface of such leading end portion being cut out. A cutting insert 200 to be described below is mounted on an inner surface of the recessed part 111.

The cutting insert 200 is a portion having a cutting edge 210 and is formed of cemented carbide. The cutting insert 200 may be formed of a material other than the cemented carbide. The cutting insert 200 is removably mounted on an insert seat which is provided at one end in the longitudinal direction of a cartridge, with a screw 270 that extends through the cutting insert 200, and the cartridge is fastened and fixed with a screw at a position in the vicinity of a leading end side-end portion of the inner surface of the recessed part 111. The cutting edge 210 of the cutting insert 200 protrudes from the leading end of the body 100 toward a further side of the leading end. During machining of a workpiece, the body 100 is rotated about a rotational axis AX1. The rotating direction thereof is a direction indicated by the arrow AR1 in Fig. 1. When the body 100 is rotated, the cutting edge 210 bites and thereby cuts the workpiece, whereby a hole is formed in the workpiece. The hole machining tool 10 according to the present embodiment is configured as a so-called "cartridge-type" tool, in which the cutting insert 200 having the above-described cutting edge 210 and the cartridge are separate components that are replaceable. Such configuration allows for a cutting insert 200 having a different shape to be used by replacing the cartridge with another cartridge having a different shape. Even in the case of cartridges having the same shape, when a portion of the cartridge which is in the vicinity of an insert seat is damaged, it is possible to replace only such cartridge, thereby making it possible to extend the tool life of the body 100.

The body 100 includes a guide part 300 in its main body part 110. The guide part 300 abuts on the inner surface of the hole of the workpiece during machining, to thereby suppress vibration, etc. of the body 100. The hole formed in the workpiece by machining using the hole machining tool 10 will hereinafter also be referred to as the "machined hole." The provision of the guide part 300 makes it possible to perform machining while maintaining the straightness or circularity of the machined hole.

When the cutting edge 210 is provided only at one position in the circumferential direction as in the present embodiment, a force in a biased direction acts on the hole machining tool 10 during machining. Thus, by providing the guide part 300 at a position receiving such force, it is possible to suppress deformation, etc. of the body 100 during machining and is therefore possible to maintain the straightness or circularity of the machined hole as described above.

The guide part 300 is provided on a peripheral part of the main body part 110 at a position in the vicinity of a leading end-side end portion of the body 100. In the present embodiment, three guide parts 300 are provided on the main body part 110, and these guide parts 300 are aligned in the circumferential direction. The number of the guide parts 300 provided on the main body part 110 may be different from that of the present embodiment. For example, one or two guide parts may be provided, or four or more guide parts may be provided.

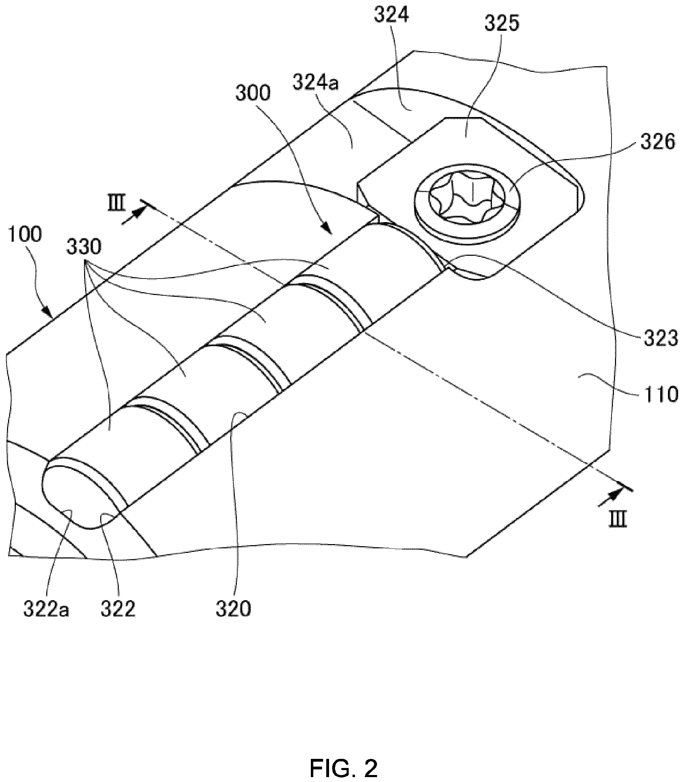

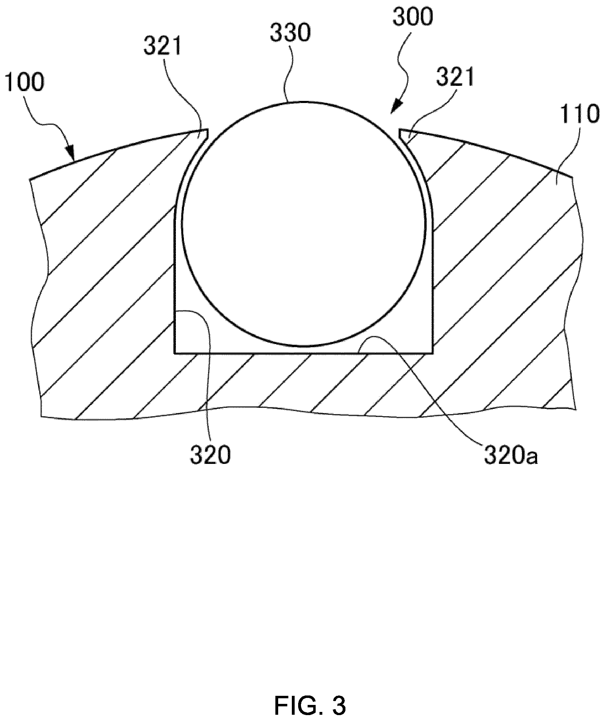

The specific configuration of the guide part 300 will now be described below. As shown in Figs. 2 and 3, the guide part 300 has a holding groove 320 and rolling elements 330.

The holding groove 320 is formed in the main body part 110. The holding groove 320 extends along the rotational axis AX1 of the main body part 110. Multiple rolling elements 330 are provided. In the present embodiment, four rolling elements 330 are provided in one guide part 300. These rolling elements 330 are accommodated so as to be rollable in the holding groove 320 and aligned along the rotational axis AX1 of the main body part 110. The number of the rolling elements 330 provided in the guide part 300 may be different from that of the present embodiment. For example, one rolling element 330 may be provided in the guide part 300.

The rolling elements 330 are formed in a cylindrical form, and are each held in the holding groove 320 so as to be rollable about a central axis that extends in the same direction as the rotational axis AX1 of the main body part 110.

The holding groove 320 has a width that is slightly larger than the outer diameter of the rolling elements 330. In addition, the holding groove 320 has overhanging parts 321 that overhang in directions in which they approach each other, from both of edges of the holding groove 320 that are located on the outer peripheral side of the main body part 110, so that the groove width at the upper edges thereof is slightly smaller than the diameter of the rolling elements 330. Such configuration allows for the rolling elements 330 accommodated in the holding groove 320 to be prevented from falling off from the holding groove 320 toward the outer peripheral side of the main body part 110. The rolling elements 330 accommodated in the holding groove 320 are each held with part thereof protruding from the holding groove 320 with respect to the peripheral surface of the main body part 110.

The holding groove 320 has a leading end opening 322 on the leading end side of the main body part 110. The leading end opening 322 has a bottom part 322a which is located on the radially outer side of the main body part 110, with respect to the bottom surface 320a of the holding groove 320. For example, the bottom part 322a of the leading end opening 322 may have a height which is about equal to the center of each rolling element 330 accommodated in the holding groove 320. Such configuration allows for the rolling elements 330 to be accommodated in the holding groove 320 without falling off from the leading end side of the main body part 110. In addition, by providing the holding groove 320 with the leading end opening 322, the rolling elements 330 can be arranged as close as possible to the leading end of the main body part 110, which makes it possible to further enhance the guiding function of the guide part 300.

A groove 324 is formed on the rear end-side of the main body part 110 with respect to the holding groove 30. Such configuration allows for the holding groove 320 to have a rear end opening 323 on the rear end-side of the main body part 110, and the rear end opening 323 communicates with the groove 324. The groove 324 has a bottom surface 324a that is flush with the bottom surface 320a of the holding groove 320. Accordingly, the entire rear end opening 323 is opened to the groove 324. The position of the bottom surface 324a of the groove 324 may be located on the radially inner side of the main body part 110 with respect to the bottom surface 320a of the holding groove 320.

A piece member 325 is fitted and attached in the groove 324. The piece member 325 is formed in a rectangular shape and fastened and fixed onto the main body part 110 with a screw 326. By fitting and fixing the piece member 325 in the groove 324, the rear end opening 323 of the holding groove 320 is closed. As a result, the rolling elements 330 are prevented from falling off from the rear end opening 323 and maintained so as to be accommodated in the holding groove 320.

In such guide part 300, the rolling elements 330 are sequentially inserted from the rear end opening 323 into the holding groove 320, so that the rolling elements 330 are accommodated in the holding groove 320 in a state of being aligned in a single line. The piece member 325 is fitted in the groove 324 with the rolling element 330 being accommodated, and the piece member 325 is fixed onto the main body part 110 with the screw 326, whereby the rolling elements 330 are maintained so as to be rollably accommodated within the holding groove 320.

By providing the body 100 with the guide member 300, the hole machining tool 10 is configured such that the cylindrical rolling elements 330 in the guide part 300 roll while abutting on the inner surface of a hole in a workpiece during machining. Such configuration allows for the vibration, etc. of the body 100 during machining to be suppressed, and the body 100 can therefore perform machining while maintaining the straightness and circularity of the machined hole.

In this way, in the body 100 and the hole machining tool 10 that comprise the guide part 300 with the rolling elements 330, since the rolling elements 330 of the guide part 300 which are held in the holding groove 320 of the main body part 110 roll while abutting on the inner surface of a hole in a workpiece during machining, it is possible to guide the main body part 110 with respect to the inner surface of the hole in the workpiece during machining, while suppressing welding due to heat generated by friction, and it is therefore possible to extend the tool life.

Furthermore, since the plurality of rolling elements 330 are aligned and accommodated in the holding groove 320 that extends along the rotational axis AX1 of the main body part 110, the main body part 110 can be stably guided in a balanced way with respect to the inner surface of the hole in the workpiece.

In addition, with the guide 300 having the plurality of rolling elements 330, even if the length of the groove 324 formed in the main body part 110 is reduced in order to accommodate the rolling elements 330 in the holding groove 320, it is still possible to provide a long contact surface with respect to the inner surface of a hole in a workpiece. Such configuration makes it possible to achieve stable guiding without making a cutout in, and thereby reducing the volume of, the main body part 110 and reducing the stiffness thereof. In addition, when a rolling element 330 becomes worn and needs to be replaced, it is sufficient to replace only such worn rolling element 330, and it is therefore economically efficient. Furthermore, since the mass of a single rolling element 330 can be made small, it is possible to make the rolling element 330 rollable with small force, and is therefore possible to reduce the frictional resistance, which is a rolling friction. In addition, by exchanging the positions of the plurality of rolling elements 330 on a regular basis, it is possible to cause the rolling elements 330 to evenly wear, so that all the rolling elements 330 can be replaced at the same timing.

Although the guide part 300 having the cylindrical rolling elements 330 has been described in the first embodiment above, the shape of the rolling elements 330 is not limited to the cylindrical shape. The following description will describe a guide part 300A comprising rolling elements 330 having a different shape, according to a modification. It should be noted that like components to those in the above-described configuration example will be denoted with like reference numerals, and redundant descriptions will be omitted.

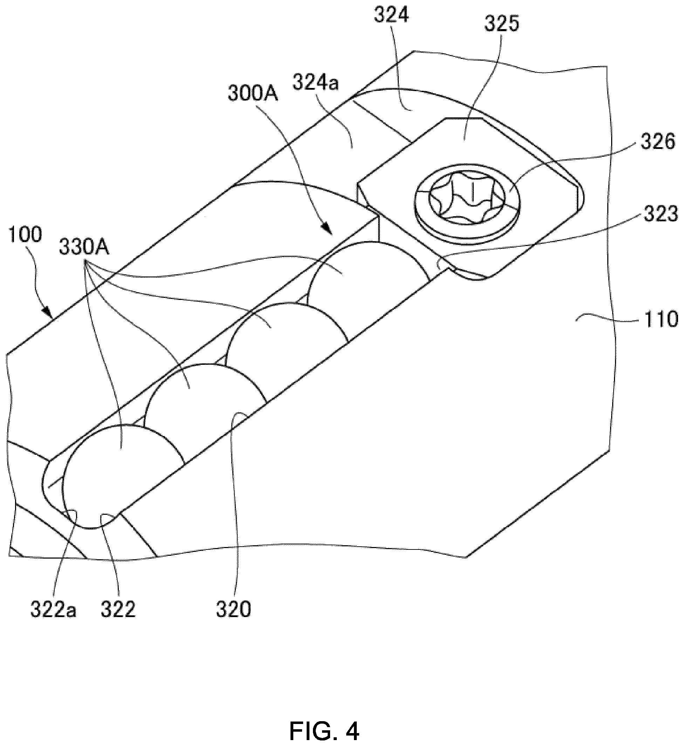

As shown in Fig. 4, the guide part 300A according to the modification comprises a plurality of spherical rolling elements 330A. In such guide part 300A, the spherical rolling elements 330A are sequentially inserted into the holding groove 320 from the rear end opening 323, so that the rolling elements 330A are accommodated in the holding groove 320 in a state of being aligned in a single line. In the state where the rolling elements 330A are accommodated, the piece member 325 is fitted in the groove 324 and fixed onto the main body part 110 with the screw 326, whereby the rolling elements 330A are maintained so as to be rollably accommodated in the holding groove 320.

By providing the body 100 with the guide part 300A, the hole machining tool 10 is configured such that the spherical rolling elements 330A in the guide part 300A roll while abutting on the inner surface of a hole in a workpiece during machining. Such configuration allows for the vibration, etc. of the body 100 during machining to be suppressed, and the body 100 can therefore perform machining while maintaining the straightness and circularity of the machined hole. In particular, since the spherical rolling elements 330A of such guide part 300A roll while abutting on the inner surface of the hole in the workpiece, it is possible to further reduce the contacting surface with respect to the inner surface of the hole, and is therefore possible to further reduce the frictional force.

### (Second Embodiment)

A second embodiment will now be described below. It should be noted that like components to those in the first embodiment will be denoted with like reference numerals, and redundant descriptions will be omitted.

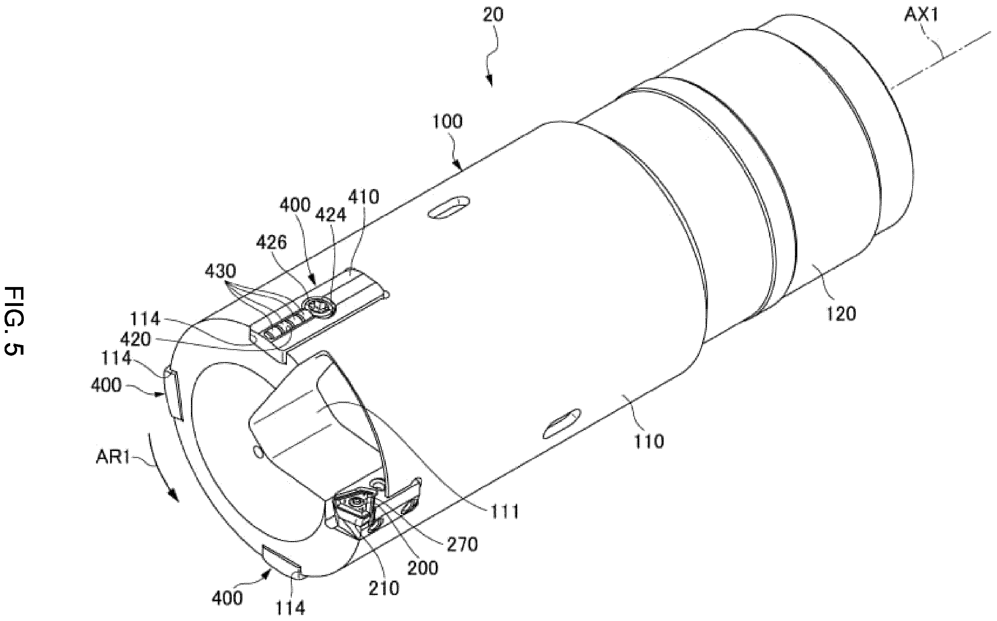

As shown in Fig. 5, a hole machining tool 20 according to the second embodiment has a guide pad 400 that is attached to the body 100.

The main body part 110 of the body 100 has recessed parts 114 arranged with intervals therebetween in the circumferential direction. The guide pad 400 is fitted and attached in the recessed part 114 of the main body part 110. The guide pad 400 is attached to the main body part 110 along the rotational axis AX1 thereof.

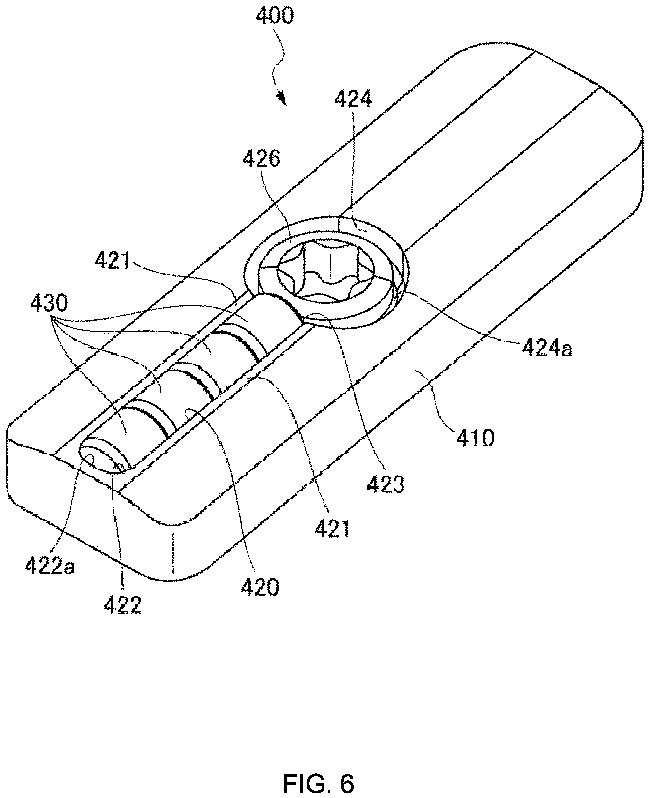

As shown in Fig. 6, the guide pad 400 has a base part 410 and rolling elements 430. The base part 410 is formed in a rectangular shape in a plan view. In a state in which the base part 410 is fitted in the recessed part 114 of the main body part 110, the base part 410 has its central part in the longitudinal direction fastened and fixed onto the main body part 110 by using a screw (fastening member) 426.

The base part 410 has a holding groove 420 on one end side with respect to its central part in the longitudinal direction, which serves as a boundary. The holding groove 420 extends in the longitudinal direction of the base part 410. Multiple rolling elements 430 are provided. In the present embodiment, four rolling elements 430 are provided in a single guide pad 400. These rolling elements 430 are accommodated so as to be rollable in the holding groove 420 and aligned along the longitudinal direction of the base part 410. The number of the rolling elements 430 provided in the guide pad 400 may be different from that of the present embodiment. For example, only one rolling element 430 may be provided in the guide pad 400.

The rolling elements 430 are formed in a cylindrical shape. In a state in which the guide pad 400 is attached to the main body part 110, the rolling elements 430 are each held in the holding groove 420 so as to be rollable about a rotational axis that extends in the same direction as the rotational axis AX1 of the main body part 110.

The holding groove 420 has a width that is slightly larger than the outer diameter of the rolling elements 430. In addition, the holding groove 420 has overhanging parts 421 that overhang in directions in which they approach each other, from both of its upper edges, so that the groove width between the upper edges thereof is slightly smaller than the diameter of the rolling elements 430. Such configuration allows for the rolling elements 430 accommodated in the holding groove 420 to be prevented from falling off from the holding groove 420 from the upper edges thereof. The rolling elements 430 accommodated in the holding groove 420 are each held with part thereof protruding from an upper surface of the holding groove 420.

The holding groove 420 has a leading end opening 422 on an end side thereof. The leading end opening 422 has a bottom part 422a which is arranged on the upper surface side of the base part 410, with respect to the bottom surface of the holding groove 420. For example, the bottom part 422a of the leading end opening 422 may have a height which is about equal to the center of each rolling element 430 accommodated in the holding groove 420. Such configuration allows for the rolling elements 430 to be accommodated in the holding groove 420 without falling off from the end side of the base part 410. In addition, by providing the holding groove 420 with the leading end opening 422, the rolling elements 430 can be placed as close as possible to the leading end of the main body part 110 when the guide pad 400 is attached to the main body part 110 of the body 100, which makes it possible to further enhance the guiding function of the guide pad 400.

In addition, a countersunk hole 424 is formed in a central area of the base part 410. Such configuration allows for the holding groove 420 to have a rear end opening 423 which is located in the central area of the base part 410, such that the rear end opening 423 communicates with the countersunk hole 424. The countersunk hole 424 has a bottom surface 424a that is flush with a bottom surface of the holding groove 420. Accordingly, the entire rear end opening 423 opens at the countersunk hole 424. It should be noted that the bottom surface 424a of the countersunk hole 424 may be located on the lower side in the base part 410, with respect to the bottom surface of the holding groove 420.

A screw 426 that fastens and fixes the guide pad 400 in the main body part 110 is inserted in the countersunk hole 424. In this way, the rear end opening 423 of the holding groove 420 is closed by inserting the screw 426 into the countersunk hole 424 to thereby fix the guide pad 400 in the main body part 110. This enables the rolling elements 430 to be maintained so as to be accommodated within the holding groove 420 without falling off from the rear end opening 423.

In such guide pad 400, the rolling elements 430 are sequentially inserted from the rear end opening 423 into the holding groove 420, whereby they are accommodated in the holding groove 420 in a state of being aligned in a single line. The guide pad 400 is fitted in the recessed part 114 of the main body part 110 with the rolling elements 430 being accommodated therein, and the screw 426 which has been inserted into the countersunk hole 424 of the base part 410 is screwed into a female thread (not shown) formed in the main body part 110 and fixed in the main body part 110, whereby the rolling elements 430 are maintained so as to be rollably accommodated within the holding groove 420. In addition, since the screw 426 prevents the rolling elements 430 from falling off from the holding groove 420 in the guide pad 400, such configuration does not require a piece, being a separate member that serves as a retainer, and it is therefore possible to reduce the number of components.

By providing the body 100 with the guide pad 400, the hole machining tool 20 is configured such that the cylindrical rolling elements 430 in the guide pad 400 roll while abutting on the inner surface of a hole in a workpiece during machining. Such configuration allows for the vibration, etc. of the body 100 during machining to be suppressed, and the body 100 can therefore perform machining while maintaining the straightness and circularity of the machined hole.

In this way, in the hole machining tool 20 having the guide pad 400 with rolling elements 430, since the rolling elements 430 held in the holding groove 420 of the guide pad 400 roll while abutting on the inner surface of the hole in the workpiece during machining, it is possible to guide the body 100 with respect to the inner surface of the hole in the workpiece during machining, while suppressing welding due to heat generated by friction, and it is therefore possible to extend the tool life.

Furthermore, since the plurality of rolling elements 430 are aligned in a single line and accommodated in the holding groove 420, the body 100 can be stably guided in a balanced way with respect to the inner surface of the hole in the workpiece.

According to the guide pad 400 having the plurality of rolling elements 430, when a rolling element 430 becomes worn and needs to be replaced, it is sufficient to replace only such worn rolling element 430, and it is therefore economically efficient. Furthermore, since the mass of a single rolling element 430 can be made small, it is possible to make the rolling element 430 rollable with small force, and is therefore possible to reduce the frictional resistance, which is a rolling friction. In addition, by exchanging the positions of the plurality of rolling elements 430 on a regular basis, it is possible to cause the rolling elements 430 to evenly wear, so that all the rolling elements 430 can be replaced at the same timing.

Although the guide pad 400 having cylindrical rolling elements 430 has been described in the second embodiment above, the shape of the rolling elements 430 is not limited to the cylindrical shape, and may alternatively be, for example, spherical. When the rolling elements 430 are spherical, it is possible to further reduce the contacting surface with respect to the inner surface of the hole, and is therefore possible to further reduce the frictional force.

The embodiments of the present disclosure have been described above with reference to the specific examples. However, the present disclosure is not limited to these specific examples. Design modifications which are added by a person skilled in the art with respect to these specific examples are also encompassed in the scope of the present disclosure, as long as such design modifications comprise the characteristics of the present disclosure. Each of the elements, as well as the arrangement, conditions, shapes, etc. of such elements, in each of the above-described specific examples are not limited to those described in the examples, and they may be changed as appropriate. The elements in each of the above-described specific examples may be combined in different ways, as long as no technical contradiction arises.

The present invention provides a body, a guide pad, and a hole machining tool, which have a guide part capable of suppressing welding due to heat generated by friction during machining and therefore extending the tool life.

## Claims

1. A body of a hole machining tool, comprising:
a main body part formed in a cylindrical shape; and
a guide part provided on a peripheral part of the main body part,
wherein the guide part has a holding groove formed in the main body part and a rolling element accommodated so as to be rollable in the holding groove.

2. The body according to claim 1, wherein the rolling element is replaceable.

3. The body according to claim 1 or 2, wherein:
the holding groove extends along a rotational axis of the main body part; and
a plurality of the rolling elements are aligned and accommodated in the holding groove.

4. The body according to any one of claims 1 to 3, wherein the rolling element is formed in a cylindrical shape and held within the holding groove so as to be rollable about a central axis that extends in the same direction as a rotational axis of the main body part.

5. The body according to any one of claims 1 to 3, wherein the rolling element is formed in a spherical shape.

6. A hole machining tool, comprising:
the body according to any one of claims claims 1 to 5; and
a cutting insert mounted on the body.

7. A guide pad attached on a peripheral part of a body of a hole machining tool, preferably the hole machining tool of claim 6, the guide pad comprising:
a base part having a holding groove; and
a rolling element accommodated so as to be rollable within the holding groove.

8. The guide pad according to claim 7, wherein the rolling element is replaceable.

9. The guide pad according to claim 7 or 8, wherein a plurality of the rolling elements are aligned in a single line and accommodated in the holding groove.

10. The guide pad according to any one of claims 7 to 9, wherein the rolling element is formed in a cylindrical shape and held within the holding groove so as to be rollable about a same central axis.

11. The guide pad according to any one of claims 7 to 9, wherein the rolling element is formed in a spherical shape.

12. The guide pad according to any one of claims 7 to 11, wherein:
the base part is fixed on the body with a fastening member; and
the rolling element is prevented from falling off from the holding groove by using the fastening member.

13. A hole machining tool, comprising:
the guide pad according to any one of claims 7 to 12;
a body on which the guide pad is attached; and
a cutting insert mounted on the body.
